# EUROPEAN PATENT SPECIFICATION

(11) **EP 1 611 986 B1**
(45) Date of publication and mention of the grant of the patent: **14.08.2013**
(21) Application number: 05009968.8
(22) Date of filing: 06.05.2005
(51) Int. Cl.: B23H 7/10

(54) **Diffuser intended to equalize the flow of a fluid leaving an injection nozzle in the machining zone of a wire electrical discharge machine**
Diffusor zur Ausgleichung des Bearbeitungsmittelstromaustritt aus einer Einspritzdüse in einer Drahtschneidefunkenerosionsmaschine
Diffuseur pour égaliser le débit du fluide d'usinage sortant de la duse d'une machine d'usinage par électroérosion par file.

(30) Priority: 01.07.2004 CH 11162004
(43) Date of publication of application: 04.01.2006
(73) Proprietor: Agie Charmilles SA, 6616 Losone (CH)
(72) Inventor: Tricarico, Claudio, 1260 Nyon (CH); Demule, Guy, 74800 Cornier (FR); Batelaan, Dirk Cornelis, 1212 Grand Lancy (CH)
(74) Representative: De Colle, Piergiacomo

(56) References cited:
- EP-A- 0 161 656
- PATENT ABSTRACTS OF JAPAN vol. 009, no. 007 (M-350), 12 January 1985 (1985-01-12) & JP 59 156623 A (INOUE JAPAX KENKYUSHO KK; others: 01), 5 September 1984 (1984-09-05)
- PATENT ABSTRACTS OF JAPAN vol. 010, no. 051 (M-457), 28 February 1986 (1986-02-28) & JP 60 201823 A (TOSHIBA KK), 12 October 1985 (1985-10-12)

## Description

The present invention relates to an injection nozzle comprising a diffuser incorporated therein adapted to equalize the flow of a fluid leaving said nozzle in a machining zone of a wire electrical discharge machine, said diffuser comprising at least an upstream an a downstream wall forming at least an upstream, an inside and a downstream expansion chamber, said walls comprising an arrangement of orifices.

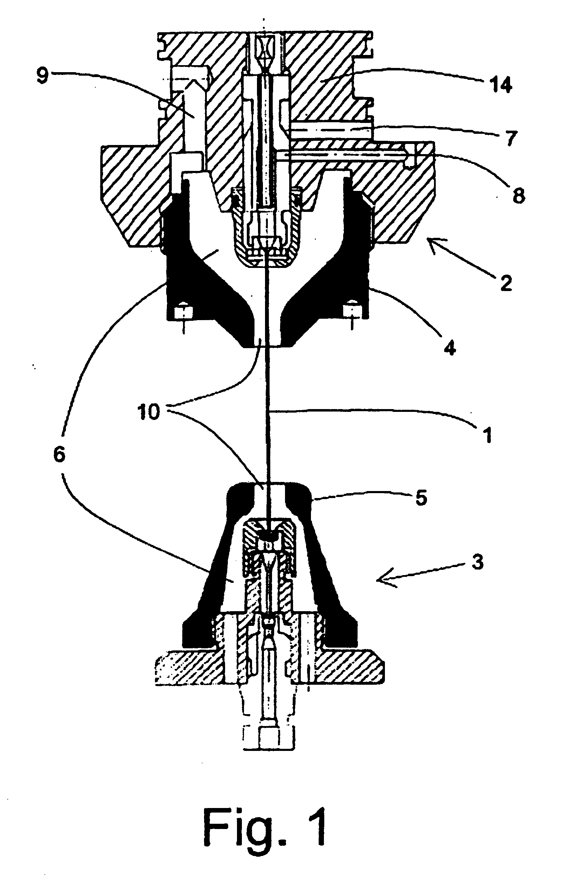

A description of such a wire electrical discharge machine with its injection nozzles can be found in document EP 0 381 277 A1. The injection nozzles of these machines are used to spray a dielectric liquid towards the machining zone to irrigate the slot machined in the workpiece by the wire electrode. In this type of machine tool, see Figure 1, the electrode wire 1 passes continuously between two wire guides, one in the upper machining head 2 and the other in the lower machining head 3. The upper head 2 comprises a nozzle 4 which injects a liquid downwards around the wire 1. Likewise, the lower head comprises a nozzle 5 which injects the liquid upwards around the wire 1. The desire is to obtain a compact cylindrical jet around the wire in the machining zone. The chambers 6 inside the nozzles 4 and 5 form particularly critical flow canals; if there is a geometric imperfection, turbulence may begin therein and disrupts the axial symmetry of the outlet jets 10.

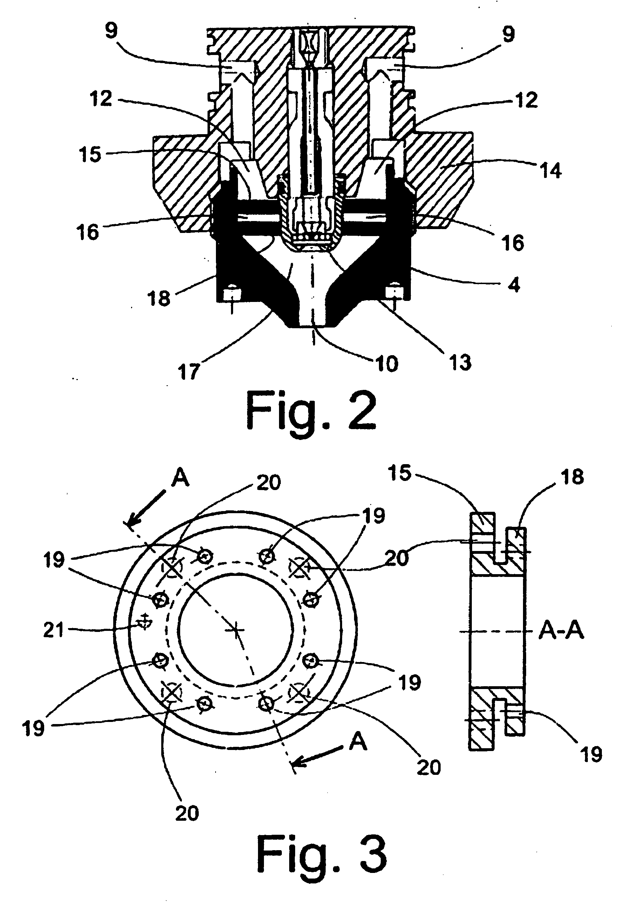

Figure 1 shows the various types of canals via which dielectric liquid arrives through the master piece 14 in the upper head 2; at 7 the canal intended for the flow for automatically threading the wire; at 8 the canal intended for cooling and wetting the wire guide and contact assembly; at 9 one of the two feeds to the chamber 6 in the upper nozzle 4 underlying the invention; the second feed to the same nozzle, symmetric with the first, is not depicted in Figure 1, for that, refer to Figure 2. In spite of the fact that fluid enters the chamber 6 via two canals 9, as symmetric as they can be and delivering the same flow rate, geometric imperfections nonetheless create inevitable differences in pressure drop along the flow paths taken by each elementary stream within the nozzle as far as its outlet 10 and therein give rise to extremely complicated interference phenomena. As a result, it is very difficult to obtain a perfectly uniform flow leaving the nozzle 10 and the equilibrium of the wire 1 may thereby be disrupted. In most roughing-out machining operations, such asymmetries in the flow do not give rise to effects that can be perceived on the machined workpiece, although the machining efficiency is not as good. By contrast, in precision machining on workpieces comprising series of fine details, the finished workpiece exhibits variations in dimensions within one hundredth of a millimetre along the orientation of the machining slot, reflecting the irregularities within the jet of dielectric resulting from the initial asymmetries in the flow canals 9.

Patent abstract of Japan vol.009,No.007(M-350),12 January 1985 & JP 59 156623 A (Inoue Japax Kenkyusho KK; others: 01), 5 September 1984, discloses a machining liquid nozzle adapted to cool the wire electrode. This nozzle comprises a main unit with a guide holder of cylindrical shape maintaining a wire guide. A plural number of holes are provided in the wall of the guide holder allowing the machining liquid to flow from the inside of the guide holder to the outside. The machining liquid is thus sufficiently supplied to the wire electrode in the vicinity of the wire guide improving the efficiency of cooling the wire electrode. This nozzle includes three chambers, one upstream, one inside and one downstream of the guide holder. The nozzle is particularly aimed to obtain an efficient cooling of the wire electrode, but not to remedy to any initial imperfections in symmetry uniformly across the entire flow of liquid.

It is the aim and approach of this invention to solve the problem of imperfection in symmetry and the injection nozzle according to the invention is characterized to this purpose comprising the features of the independent claim 1.

By means of these features the initial imperfections in symmetry are distributed uniformly across the entire flow using a multi-stage diffuser. At each stage, an expansion chamber is formed that works like a mixer. The flow originating from this expansion chamber is broken down more finely before it enters the next expansion chamber which may be the outlet chamber of the injection nozzle. Give or take the imperfection, the entry into the first expansion chamber is via two identical canals delivering the same flow rate. Starting from this observation, the overall flow will be broken down more finely in each stage of the diffuser according to the initial binary diagram. The diffuser may have as many stages as desired.

Because the first division of the primary stream consists in creating two symmetric canals, each subsequent branch will aim to divide its inlet flow into two, symmetrically. All of the outlet orifices of one expansion chamber must be distributed uniformly in a ring; each orifice must have the same cross section and the same shape. In that way, at the outlet from the last stage, each orifice will deliver a flow more or less identical to each of the others and the flow towards the outlet of the injection nozzle will be equalized. As a result, variations in dimensions on the finished workpiece caused by the orientation of the machining slot are **no** longer perceivable.

A preferred embodiment of the invention is detailed hereinbelow with the aid of the figures.
Figure 1 depicts, in section, the upper machining head and the lower machining head of a wire electrical discharge machine with, in black, the two injection nozzles underlying the invention.
Figure 2 is another view in section of the upper machining head showing the two inlet canals and the three expansion chambers formed by the presence of a diffuser incorporated into the nozzle according to the invention.
Figure 3 depicts two views of the diffuser in a preferred embodiment.
Figure 4 is an exploded depiction of the nozzle-diffuser assembly.
Figure 5 depicts the diffuser incorporated into the nozzle.

The following explanation describes the example, illustrated by Figure 2, of a diffuser placed inside the upper injection nozzle 4 and incorporated thereinto. Figure 2 simply illustrates the splitting into three of the initial chamber 6 depicted in Figure 1 and the formation of three chambers 12, 16, 17. The diffuser piece itself is depicted in Figure 3 in a preferred embodiment. At each stage, the expansion chambers formed by the diffuser piece that is the subject of the invention are bounded upstream and/or downstream by one or two walls in the form of a ring pierced with orifices which route the fluid. The first chamber 12 is fed by two symmetric canals 9 pierced in the mounting plate 14 of the upper head 2. These two canals open vertically on each side of the upper wire guide support 13 and symmetrically with respect to the latter. This first chamber 12 is therefore bounded at the top by the mounting plate of the upper head 14 and at the bottom by the upstream ring of the diffuser 15, Figures 2 and 3; the chamber 12 works like a mixer as do the subsequent expansion chambers 16, 17.

At each stage, the orifices pierced in the upstream wall route the fluid into the expansion chamber. To supplement the equalizing action performed for example by the expansion chamber 16 situated within the diffuser, the orifices pierced in the downstream wall 18 are arranged in pairs 19 each constituting a branch and are dimensioned in such a way as to divide each upstream stream into two equal parts as if it came exclusively from each central orifice 20. This symmetric dividing into two of each upstream flow canal within the diffuser supplements the effect of dispersing the errors that is performed by the intermediate expansion chamber 16 which mixes the upstream flows by making them communicate with one another.

In the case of the first chamber 12, the same symmetrical division, as described hereinabove, would not be ensured if the diffuser were installed carelessly in the nozzle. As a result, means are provided for angularly indexing the diffuser with respect to the two canals 9 pierced in the mounting plate 14 of the upper head 2. For example, a pin 21, not depicted in the section A-A of Figure 3, crimped on one side into the upstream wall 15 of the diffuser and which becomes lodged in the other side in a drilling, not depicted, in the mounting plate 14, makes it possible when assembling to ensure that the four canals 20 pierced in the wall 15 of the diffuser divide the two upstream flows into two equal parts down two branches as if the inlet flow of each branch came exclusively from one single central orifice 9.

In addition, the canals 19, 20 pierced in a dividing wall 18 and 15 respectively are distributed uniformly around the periphery of the wall. The diffuser in its entirety forms several expansion chambers arranged in successive stages. The flow of liquid becomes increasingly uniform as it is dispensed through the diffuser. By increasing the number of stages and repeating the splitting in the same way, increasingly fine equalization of the outlet flow will be obtained.

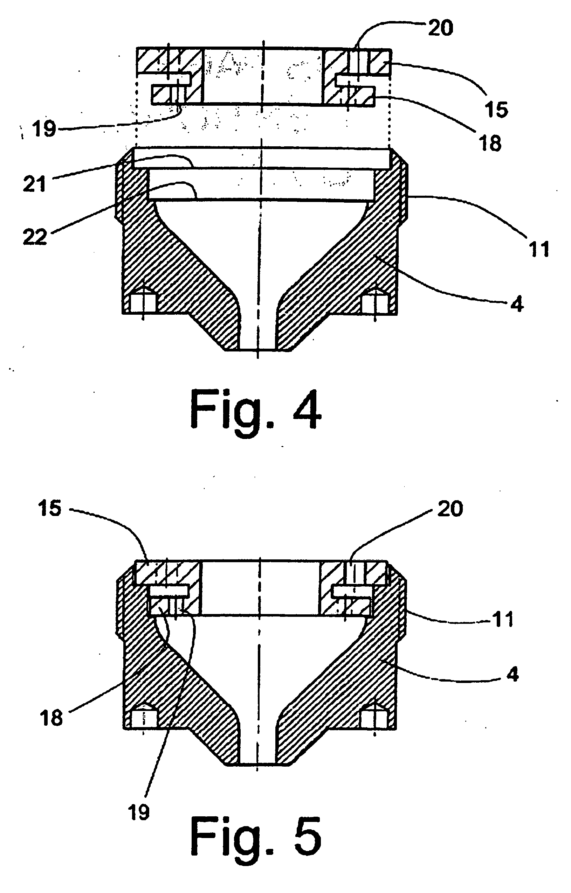

The diffuser depicted in Figure 3 is incorporated into the nozzle 4 as illustrated by Figures 4 and 5. The nozzle 4 has a screw thread 11 which allows it to be fixed in the mounting plate 14. Two counter bores 21, 22 have been milled in the nozzle 4 to act as cylindrical internal housings to accommodate the two flanges, or walls, 15 and 18 respectively, of the diffuser.

The example chosen demonstrates the advantages of multiple binary division of the flows of liquid, associated with an intermediate mixing effect performed by expansion chambers. Such a diffuser improves the dimensional uniformity and the precision that can both be measured on the finished workpiece when machining details of geometric dimensions of the order of 5 mm. For machining details with geometric dimensions below 5 mm, further stages may need to be added.

Of course, the embodiment described hereinabove is not in any way limiting and can be adapted within the scope of the claims. The diffuser and the nozzle in which it is incorporated may be designed as a single one-piece part; alternatively, the various stages of the diffuser may become independent and removable elements. The diffuser may form more than three expansion chambers. Its angular indexing with respect to the inlet orifices may be achieved by means other than a pin. It may receive the inlet flow via a single canal and perform the first symmetric division, etc.

## Claims

1. Injection nozzle comprising a diffuser incorporated therein adapted to equalize the flow of a fluid leaving said nozzle in a machining zone of a wire electrical discharge machine, said diffuser comprising at least an upstream an a downstream wall (15, 18) forming at least an upstream, an inside and a downstream expansion chamber (12, 16, 17), said walls comprising an arrangement of orifices (20, 19), **characterized by** the fact that the orifices (19, 20) in each wall being distributed uniformly in a ring around the periphery of the wall and each of the orifices in said wall being of the same cross section and shape, and that for each of the orifices (20) in the upstream wall (15) a corresponding pair of orifices (19) in the downstream wall (18) is provided so as to divide the flow originating from each orifice of the upstream wall into two equal flows exiting the corresponding orifices of the downstream wall, thus supplementing the equalizing action performed by said expansion chambers operating as a mixer in order to obtain an equalization of the outlet flow (10) of the nozzle.

2. Injection nozzle according to claim 1 **characterized in that** it has an upper head having a mounting plate (14) having two symmetric canals (9) pierced therein which feed the upstream expansion chamber (12) with two upstream flows , four orifices (20) pierced in the upstream wall (15) of the diffuser dividing each of the two upstream flows into equal parts down and eight orifices (19) in the downstream wall (18) of the diffuser dividing each of said equal parts into two further equal parts.

3. Injection nozzle according to claim 2, **characterized in that** said two canals (9) located in the mounting plate (14) of the injection nozzle and open into the upstream expansion chamber (12), the injection nozzle comprising housings (21, 22) adapted to accommodate the walls (15, 18) of the diffuser and means for angularly indexing the diffuser with respect to the two canals (9) located in the mounting plate (14).

4. Injection nozzle according to claim 1, **characterized by** the fact that the number of stages comprising a wall (15, 18) and an expansion chamber (16, 17) is increased and binary division of the flow of fluid is repeated in order to obtain an increasingly fine equalization of the outlet flow (10) of the nozzle.

## Patentansprüche

1. Einspritzdüse, die einen darin enthaltenen Diffusor umfasst, der ausgebildet ist, um den Strom eines Fluids auszugleichen, das aus der Düse in einer Bearbeitungszone einer Drahtschneidefunkenerosionsmaschine austritt, wobei der Diffusor mindestens eine stromaufwärts und eine stromabwärts befindliche Wand (15, 18) umfasst, die mindestens eine stromaufwärts befindliche, eine innenliegende und eine stromabwärts befindliche Ausdehnungskammer (12, 16, 17) bildet, wobei die Wände eine Anordnung von Öffnungen (20, 19) umfassen, **dadurch gekennzeichnet, dass** die Öffnungen (19, 20) in jeder Wand gleichmäßig in einem Ring rund um den Umfang der Wand verteilt sind und dass jede der Öffnungen in der Wand den gleichen Querschnitt und die gleiche Form aufweist, und dass für jede der Öffnungen (20) in der stromaufwärts befindlichen Wand (15) ein entsprechendes Paar Öffnungen (19) in der stromabwärts befindlichen Wand (18) vorgesehen ist, um so den aus jeder Öffnung der stromaufwärts befindlichen Wand stammenden Strom in zwei gleiche Ströme aufzuteilen, die aus den entsprechenden Öffnungen der stromabwärts befindlichen Wand austreten, um somit die ausgleichende Wirkung, die durch die als ein Mischer arbeitenden Ausdehnungskammern erzielt wird, zu ergänzen, so dass eine Ausgleichung des Austrittsstroms (10) der Düse erreicht wird.

2. Einspritzdüse nach Anspruch 1, **dadurch gekennzeichnet, dass** sie einen oberen Kopf mit einer Montageplatte (14) mit zwei darin ausgebohrten symmetrischen Kanälen (9) hat, über die der stromaufwärts befindlichen Ausdehnungskammer (12) zwei Anströme zugeleitet werden, wobei vier Öffnungen (20) in der stromaufwärts befindlichen Wand (15) des Diffusors, um jeden der zwei Anströme in gleiche Teile aufzuteilen, sowie acht Öffnungen (19) in der stromabwärts befindlichen Wand (18) des Diffusors ausgebohrt sind, um jeden der gleichen Teile in zwei weitere gleiche Teile aufzuteilen.

3. Einspritzdüse nach Anspruch 2, **dadurch gekennzeichnet, dass** sich die zwei Kanäle (9) in der Montageplatte (14) der Einspritzdüse befinden und sich in die stromaufwärts befindliche Ausdehnungskammer (12) hinein öffnen, wobei die Einspritzdüse Gehäuse (21, 22) umfasst, die so ausgebildet sind, dass sie die Wände (15, 18) des Diffusors und Mittel aufnehmen, mit denen der Diffusor im Verhältnis zu den in der Montageplatte (14) befindlichen zwei Kanälen (9) in winkliger Form weitergeschaltet wird.

4. Einspritzdüse nach Anspruch 1, **dadurch gekennzeichnet, dass** die Anzahl der Stufen, die eine Wand (15, 18) und eine Ausdehnungskammer (16, 17) umfassen, erhöht ist und eine binäre Aufteilung des Fluidstroms wiederholt wird, um eine zunehmend feine Ausgleichung des Abstroms (10) der Düse zu erreichen.

## Revendications

1. Buse d'injection comprenant un diffuseur incorporé dans celle-ci, prévu pour égaliser le flux d'un fluide quittant ladite buse dans une zone de machine d'une machine de décharge électrique par fil, ledit diffuseur comprenant au moins une paroi amont et un paroi aval (15, 18) formant au moins une chambre d'expansion amont, une chambre d'expansion interne et une chambre d'expansion aval (12, 16, 17), lesdites parois comprenant un agencement d'orifices (20, 19), **caractérisée en ce que** les orifices (19, 20) dans chaque paroi sont répartis uniformément dans un anneau autour de la périphérie de la paroi et chacun des orifices dans ladite paroi a la même section transversale et la même forme, et **en ce que**
pour chacun des orifices (20) dans la paroi amont (15), il est prévu une paire correspondante d'orifices (19) dans la paroi aval (18), de manière à diviser le flux provenant de chaque orifice de la paroi amont en deux flux égaux sortant par les orifices correspondants de la paroi aval, pour ainsi compléter l'action d'égalisation effectuée par lesdites chambres d'expansion fonctionnant en tant que mélangeur pour obtenir une égalisation du flux de sortie (10) de la buse.

2. Buse d'injection selon la revendication 1, **caractérisée en ce qu'**elle présente une tête supérieure ayant une plaque de montage (14) ayant deux canaux symétriques (9) percés dans celle-ci, qui alimentent la chambre d'expansion amont (12) en deux flux amont, quatre orifices (20) percés dans la paroi amont (15) du diffuseur divisant chacun des deux flux amont en parties égales et huit orifices (19) dans la paroi aval (18) du diffuseur divisant chacune desdites parties égales en deux autres parties égales.

3. Buse d'injection selon la revendication 2, **caractérisée en ce que** lesdits deux canaux (9) sont situés dans la plaque de montage (14) de la buse d'injection et ouverts dans la chambre d'expansion amont (12), la buse d'injection comprenant des boîtiers (21, 22) prévus pour recevoir les parois (15, 18) du diffuseur et des moyens pour indexer angulairement le diffuseur par rapport aux deux canaux (9) situés dans la plaque de montage (14).

4. Buse d'injection selon la revendication 1, **caractérisée en ce que** le nombre d'étages comprenant une paroi (15, 18) et une chambre d'expansion (16, 17) est accru et la division binaire du flux de fluide est répétée afin d'obtenir une égalisation de plus en plus fine du flux de sortie (10) de la buse.
